# EUROPÄISCHE PATENTANMELDUNG

(11) **EP 1 947 059 A2**
(43) Veröffentlichungstag der Anmeldung: **23.07.2008**
(21) Anmeldenummer: 08000076.3
(22) Anmeldetag: 04.01.2008
(51) Int. Cl.: C02F 1/04, C02F 101/32

(54) **Vorrichtung zur Erhöhung der Aufkonzentration**

(30) Priorität: 18.01.2007 DE 102007002775
(71) Anmelder: LOFT Anlagenbau und Beratung GmbH, 72138 Kirchentellinsfurt (DE)
(72) Erfinder: Beisle, Frank, Dipl.-Ing. (FH), 70599 Stuttgart (DE)
(74) Vertreter: Kohler Schmid Möbus

(57) **Zusammenfassung**

Eine Vorrichtung (20) zur Erhöhung der Aufkonzentration der Schmutzbestandteile von Abwasser mit einer ersten Vorrichtung (10) zur Aufbereitung von Abwasser mit einer Verdampfereinrichtung (14, 17) und mit einer zweiten Vorrichtung (20) zur Aufbereitung von Abwasser, die ebenfalls eine Verdampfereinrichtung (24, 27) aufweist, die das Schmutzwasserkonzentrat der Abwasseraufbereitungsvorrichtung (10) weiter eindickt und die durch Dampf aus der Verdampfereinrichtung (14, 17) der ersten Abwasseraufbereitungsvorrichtung (10) angetrieben ist und die dadurch gekennzeichnet ist, dass sie einen Brüdenkompressor (25) und/oder eine Vakuumpumpe, die mit der Verdampfereinrichtung (24, 27) verbunden ist, aufweist.

## Beschreibung

Der Erfindung betrifft eine Vorrichtung zur Erhöhung der Aufkonzentration der Schmutzbestandteile von Abwasser mit einer ersten Vorrichtung zur Aufbereitung von Abwasser mit einer Verdampfereinrichtung und mit einer zweiten Vorrichtung zur Aufbereitung von Abwasser, die ebenfalls eine Verdampfereinrichtung aufweist, die das Schmutzwasserkonzentrat der Abwasseraufbereitungsvorrichtung weiter eindickt und die durch Dampf aus der Verdampfereinrichtung der Abwasseraufbereitungsvorrichtung angetrieben ist.

Eine solche Vorrichtung ist aus dem deutschen Gebrauchsmuster DE 203 07 874 der Anmelderin bereits bekannt. Die Verdampfereinrichtung der Abwasseraufbereitungsanlage erhitzt das Abwasser, der entstehende Dampf wird zum größten Teil kondensiert und als Destillat wieder zu einem Verbraucher, beispielsweise einer Reinigungsanlage, zurückgeführt. Ein Teil des Dampfes dient dem Antrieb der Verdampfereinrichtung der zusätzlichen Vorrichtung, die eine weitere Erhöhung der Aufkonzentration des Schmutzwasserkonzentrats bewirkt. Der in der Verdampfereinrichtung der zusätzlichen Vorrichtung entstehende Dampf wird ebenfalls zum größten Teil kondensiert und als Destillat zum Verbraucher zurückgeleitet.

Diese sehr gut funktionierende Vorrichtung ist für die Aufbereitung aller Abwässer, die keine ölhaltige oder andere brennbare Bestandteile enthalten, vollständig ausreichend. Was mit der bekannten Vorrichtung jedoch nicht erreicht werden kann, ist eine Aufkonzentration von ölhaltigen oder organischen Schmutzbestandteilen in einem Maße, dass das Konzentrat als Brennstoff einsetzbar ist. Der vorliegenden Erfindung liegt daher die Aufgabe zu Grunde, die bekannte Vorrichtung dahin gehend zu verbessern, dass ein noch höherer Grad an Aufkonzentration der Schmutzbestandteile möglich ist.

Die Aufgabe wird mit einer Vorrichtung zur Erhöhung der Aufkonzentration der Schmutzbestandteile von Abwasser mit einer ersten Vorrichtung zur Aufbereitung von Abwasser mit einer Verdampfereinrichtung und mit einer zweiten Vorrichtung zur Aufbereitung von Abwasser gelöst, die ebenfalls eine Verdampfereinrichtung aufweist, die das Schmutzwasserkonzentrat der Abwasseraufbereitungsvorrichtung weiter eindickt und die durch Dampf aus der ersten Verdampfereinrichtung der Abwasseraufbereitungsvorrichtung angetrieben ist und die dadurch gekennzeichnet ist, dass sie einen Brüdenkompressor und/oder eine Vakuumpumpe, die mit der Verdampfereinrichtung verbunden ist, aufweist.

Durch den Brüdenkompressor und/oder die Vakuumpumpe kann die Effektivität der Vorrichtung deutlich erhöht werden. Der Kompressor oder die Pumpe sorgen für eine zusätzliche Vakuumerhöhung in der zweiten Vorrichtung. Somit kann gezielt der Siededruck der Vorrichtung gesenkt und eine deutliche Reduzierung der Restwassergehalte bzw. eine deutliche Erhöhung der Aufkonzentration erreicht werden.

Durch den Antrieb der zweiten Vorrichtung mit Dampf aus der ersten Abwasseraufbereitungsvorrichtung lassen sich die Betriebskosten im Vergleich zu einer Kaskadenschaltung zweier kompletter Abwasseraufbereitungsvorrichtungen erheblich reduzieren. Der zusätzliche Brüdenkompressor oder die Vakuumpumpe erhöhen das Vakuum deutlich. Aufgrund der Ausnutzung des Dampfes der Abwasseraufbereitungsvorrichtungen kann dies aber durch einen relativ geringen Energieeinsatz in Form von vorzugsweise elektrischer Antriebsenergie erreicht werden. Hierdurch bleibt der gute energetische Wirkungsgrad des Gesamtsystems erhalten. Außerdem ermöglicht der hohe Grad der Aufkonzentration durch den zusätzlichen Kompressor, ein Konzentrat aus ölhaltigen Abwässern oder Abwässern mit organischen Bestandteilen mit einem Restwassergehalt von kleiner als ca. 15 % direkt der energetischen Verwertung zur Verfügung zu stellen, d. h. als Brennstoff zu verkaufen. Durch diesen Zusatznutzen wird der geringe zusätzliche Energieaufwand für den Kompressor oder die Pumpe bei weitem kompensiert.

Bei Verwendung der Vorrichtung zur Aufkonzentration von Abwässern mit nicht organischen Bestandteilen führt der hohe Grad der Aufkonzentration ebenfalls zu einem wirtschaftlichen Erfolg, da die entstehende und damit zu entsorgende Abfallmenge insgesamt geringer wird.

Weitere Vorteile ergeben sich, wenn der Brüdenkompressor oder die Vakuumpumpe frequenzabhängig gesteuert werden. Die Drehzahl des Motors des Kompressors oder der Pumpe wird entsprechend dem Grad der Aufkonzentration im Laufe des Prozesses nachgeregelt.

Der Wirkungsgrad der gesamten Abwasseraufbereitungsanlage kann zusätzlich dadurch verbessert werden, dass eine Rückführung für den in der zweiten Vorrichtung entstehenden Brüdendampf zu der Abwasseraufbereitungsvorrichtung vorgesehen ist. Destillat wird aus beiden Vorrichtungen gewonnen.

Sowohl die erste Abwasseraufbereitungsvorrichtung als auch die nachgeschaltete zweite Vorrichtung zur Erhöhung der Aufkonzentration können unterschiedlich aufgebaut sein. Bei einer bevorzugten Ausführungsform kann zumindest die zweite Vorrichtung einen Wärmetauscher aufweisen und das Schmutzwasserkonzentrat zwischen dem Wärmetauscher und der Verdampfereinrichtung in einem Naturkreislauf zirkulieren. Dies führt dazu, dass das Schmutzwasser in der Vorrichtung zur Erhöhung der Aufkonzentration mehrere Kreisläufe durchläuft, wodurch eine maximale Erhöhung der Aufkonzentration der Schmutzbestandteile erzielt wird.

Die erste Abwasseraufbereitungsvorrichtung kann vorzugsweise als Brüdenverdichtungsvorrichtung ausgestaltet sein. In einer solchen Vorrichtung wird die Verdampfung des Schmutzwassers dadurch unterstützt, dass der Dampf mit einem Brüdenverdichter verdichtet, dadurch erhitzt und dann zum Wärmetauscher zurückgeführt wird. Die Aufkonzentration kann damit besonders effektiv und wirtschaftlich durchgeführt werden.

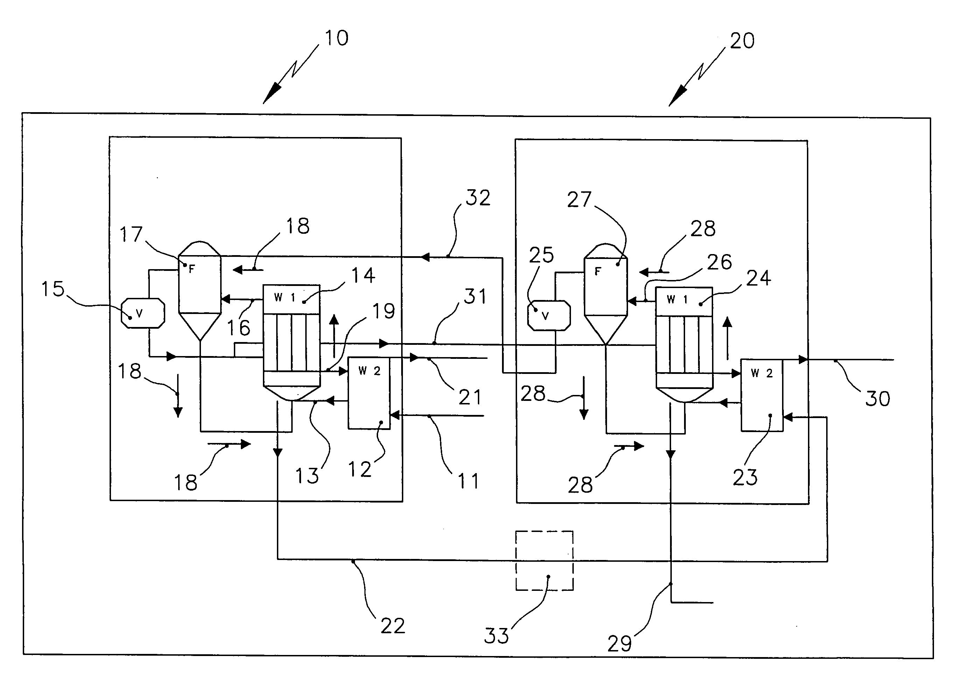

Im Folgenden wird eine mögliche Ausgestaltung der erfindungsgemäßen Vorrichtung zusammen mit einer Vorrichtung zur Abwasseraufbereitung anhand der Zeichnung näher beschrieben.

Die einzige Figur zeigt ein Blockschaltbild einer ersten Abwasseraufbereitungsvorrichtung 10 mit einer nachgeschalteten erfindungsgemäßen Vorrichtung 20 zur weiteren Aufkonzentration des Schmutzwassers der Abwasseraufbereitungsvorrichtung 10.

Das Schmutzwasser wird über eine Rohrleitung 11 zunächst einem Vorwärmetauscher 12 zugeleitet, der es vorwärmt. Von dort gelangt das Schmutzwasser über eine weitere Rohrleitung 13 zum eigentlichen Wärmetauscher 14, in dem das Schmutzwasser verdampft wird. Der Wärmetauscher 14 kann als Rohrbündel-Wärmetauscher ausgestaltet sein, dessen Rohrbündel von außen durch die in einem Brüdenkompressor 15 erhitzten und verdichteten Brüden umströmt werden. Vom Wärmetauscher 14 gelangt der Dampf über eine Leitung 16 zu einem Abscheider 17, der vorzugsweise als Zentrifugalabscheider ausgebildet ist. Der Abscheider 17 trennt den Dampf von mitgerissenen wässrigen Bestandteilen. Die abgetrennten Bestandteile verlassen den Abscheider 17 auf der Unterseite und werden zwischen dem Abscheider 17 und dem Wärmetauscher 14 in einem Naturkreislauf mehrfach zirkuliert und dadurch aufkonzentriert, was in der Figur durch die Pfeile 18 angedeutet ist. Der abgetrennte Dampf wird aus dem Abscheider 17 durch den Brüdenkompressor 15 abgesaugt. Der Brüdenkompressor 15 verdichtet den Dampf, der dadurch eine Druck- und Temperaturerhöhung erfährt. Diese erwärmten Brüden werden anschließend zum Wärmetauscher 14 geleitet, um dort das Schmutzwasser bzw. das Halbkonzentrat zu erwärmen. Das in der Abwasseraufbereitungsvorrichtung 10 entstehende Destillat gelangt vom Wärmetauscher 14 über eine Leitung 19 zum Vorwärmetauscher 12 und wird über eine weitere Leitung 21 aus diesem zu einem hier nicht dargestellten Verbraucher zurückgeführt. Das Halbkonzentrat verlässt nach einigen Zirkulationen im Naturkreislauf den Wärmetauscher 14 über eine Leitung 22 direkt oder über einen Zwischenbehälter 33 in Richtung Vorrichtung 20 zur weiteren Aufkonzentration. Die Vorrichtung 20 ist dabei ganz ähnlich aufgebaut wie die eigentliche Abwasseraufbereitungsvorrichtung 10. Das Halbkonzentrat gelangt zunächst zu einem Vorwärmetauscher 23, dann zu einem Wärmetauscher 24, wo erneut eine Verdampfung stattfindet. Der Dampf gelangt über eine Leitung 26 zu einem Abscheider 27, der die wässrigen Bestandteile von den dampfförmigen Bestandteilen trennt. Der Dampf wird wieder über einen Brüdenkompressor 25 aus dem Abscheider 27 abgesaugt und zur Vorrichtung 10 über eine Leitung 32 zurückgefördert. Auch in der Vorrichtung 20 durchläuft das Halbkonzentrat mehrere Naturkreisläufe zwischen dem Wärmetauscher 24 und dem Abscheider 27, was durch Pfeile 28 angedeutet ist, bevor es den Wärmetauscher 24 in stark aufkonzentriertem Zustand über eine Leitung 29 verlässt. Das Destillat wird aus dem Vorwärmetauscher 23 über eine Leitung 30 zu einem Verbraucher zurückgeführt.

Außer dem Antrieb für den Brüdenkompressor 25 weist die Vorrichtung 20 wie die Vorrichtung 10 keinen weiteren Antrieb auf. Der Wärmetauscher 24 wird über Dampf aus der Abwasseraufbereitungsvorrichtung 10 betrieben, der über eine Leitung 31 zugeleitet wird.

## Patentansprüche

1. Vorrichtung zur Erhöhung der Aufkonzentration der Schmutzbestandteile von Abwasser mit einer ersten Vorrichtung (10) zur Aufbereitung von Abwasser mit einer Verdampfereinrichtung (14, 17) und einer zweiten Vorrichtung (20) zur Aufbereitung von Abwasser, die ebenfalls eine Verdampfereinrichtung (24, 27) aufweist, die das Schmutzwasserkonzentrat der Abwasseraufbereitungsvorrichtung (10) weiter eindickt und die durch Dampf aus der Verdampfereinrichtung (14, 17) der ersten Abwasseraufbereitungsvorrichtung (10) angetrieben ist, **dadurch gekennzeichnet, dass** die Vorrichtung (20) einen Brüdenkompressor (25) und/oder eine Vakuumpumpe, die mit der Verdampfereinrichtung (24, 27) verbunden ist, aufweist.

2. Vorrichtung nach Anspruch 1, **dadurch gekennzeichnet, dass** der Brüdenkompressor (25) oder die Vakuumpumpe frequenzabhängig gesteuert ist.

3. Vorrichtung nach Anspruch 1 oder 2, **dadurch gekennzeichnet, dass** eine Rückführung (32) für den in der Vorrichtung (20) entstehenden Brüdendampf zu der Abwasseraufbereitungsvorrichtung (10) vorgesehen ist.

4. Vorrichtung nach einem der Ansprüche 1 bis 3, **dadurch gekennzeichnet, dass** sie einen Wärmetauscher (24) und einen Abscheider (27) aufweist und das Schmutzwasserkonzentrat der Abwasseraufbereitungsvorrichtung (10) zwischen dem Wärmetauscher (24) und dem Abscheider (27) in einem Naturkreislauf zirkuliert.

5. Vorrichtung nach einem der Ansprüche 1 bis 4, **dadurch gekennzeichnet, dass** die Abwasseraufbereitungsvorrichtung (10) eine Brüdenverdichtungsvorrichtung ist.
